(19) **Europäisches Patentamt / European Patent Office / Office européen des brevets**

(11) **EP 1 189 381 B1**

(12) **EUROPEAN PATENT SPECIFICATION**

(45) Date of publication and mention
of the grant of the patent:
**31.08.2011 Bulletin 2011/35**

(51) Int Cl.:
*H04L 1/24* (2006.01)   *H04L 27/26* (2006.01)

(21) Application number: **00202378.6**

(22) Date of filing: **07.07.2000**

(54) **Random test signal for communication systems**

Zufallssignal zum Testen von Kommunikationssystemen

Signal aléatoire pour tester des systèmes de communication

(84) Designated Contracting States:
**AT BE CH CY DE DK ES FI FR GB GR IE IT LI LU MC NL PT SE**

(43) Date of publication of application:
**20.03.2002 Bulletin 2002/12**

(73) Proprietor: **Nederlandse Organisatie voor Toegepast -Natuurwetenschappelijk Onderzoek TNO 2628 VK Delft (NL)**

(72) Inventors:
• **Van den Brink, Robertus Franciscus Maria 2331 NV Leiden (NL)**

• **Van den Heuvel, Bastiaan Matthijs 2332 RW Leiden (NL)**

(74) Representative: **Prins, Adrianus Willem Vereenigde P.O.Box 87930 2508 DH Den Haag (NL)**

(56) References cited:
FR-A- 2 783 374   GB-A- 2 031 197
US-A- 4 317 214

• **ROLLS R. G.: "Improvements in P.C.M. regenerator testing" MARCONI INSTRUMENTATION, vol. 14, no. 2, August 1973 (1973-08), pages 39-42, XP002164179 UK**

**Description**

FIELD OF THE INVENTION

The present invention is related to the field of testing communication systems such as xDSL transceivers or cables or networks. More in particular a signal, a method of generating a signal, a method of arranging a signal, a test system and a telecommunication network are disclosed that are arranged for an improved application of communication systems such as xDSL transceivers or cables or networks.

BACKGROUND

It is known in the art that transmission performance tests are needed for stressing communication systems such as xDSL transceivers in a way that is representative for the actual operation conditions in operational access networks. Specifically the transceivers are tested in a way that is representative to a high penetration of systems scenario in operational access networks. This high penetration approach enables operators to define deployment rules that apply to most of the operational situations. This high penetration approach also enables communication system manufacturers to quantify performance and to use the results thereof for improving design or proving compliance with specifications given by the operators or other instances.

A method of executing the transmission performance tests is to generate a noise signal. The tests in such case are focused on the noise margin, with respect to the crosstalk noise or impulse noise levels when xDSL signals are attenuated by a test loop and interfered with such crosstalk noise or impulse noise. The tests are to simulate noise signals that can be generated (i) by crosstalk noise e.g. from neighboring xDSL systems ; (ii) by rfi-tones that have a discrete frequency spectrum and originate e.g. from amateur broadcasting ; (iii) by pulses originating from switch components or operations ; and (iv) by lightning impact. A signal that contains the (i) crosstalk noise e.g. from neighbouring xDSL systems , and (ii) the rfi-tones that have a discrete frequency spectrum, is called impairment noise and the generator for making such noise signals is called an impairment generator.

FR 2 783 374 describes a random signal generator that starts from a random time domain signal and applies a filter operation to this signal to impose a predetermined spectral envelope. The output signal of the filter is subjected to a non-linear operation in order to change the amplitude distribution function of the signal.

US 4,317,214 describes a radar system wherein a code is transmitted to a receiver, in order to command the receiver to inject add an interference signal to a received signal for test purposes. As examples of interference signals the document mentions white noise, a pseudo random signal, a sawtooth signal or a comb signal.

PROBLEM DEFINITION

Methods of generating noise signals are known in the art. However the test systems that have been used so far for generating noise signals for the testing of communication systems are complicated in fabrication and request an adaptation of the hardware that forms part of the test systems for each different operational condition that is to be tested. For instance, each different type or length of a transmission medium such as a cable, a copper cable or an optical fiber or other cables, request a different noise signal. Thus there is need in the art for a test method and a test system that is flexible in use but provides satisfactory results on the issue of tests representativity to a high penitration of systems scenario in operational access networks. Appropriate noise signals are needed hereto and methods of generating such noise signals are needed and appropriate test systems and use in or on communication systems and in or on telecommunication networks are needed in the art.

The needed means recited here above will allow to have a better quality of signal transmission over media such as telephone cables or wireless media. A better transmission of signals allows for a broader providing of more services for the users of communication systems.

SUMMARY

A methods according to claim 1 is disclosed.

The method recited here above will allow to have a better quality of signal transmission over media such as telephone cables or wireless media. A better transmission of signals allows for a broader providing of more services for the users of communication systems.

BRIEF DESCRIPTION OF THE DRAWINGS

Figure 1 : shows according to an embodiment of a system of the present invention a functional description of the set-up of the performance tests.

Figure 2: shows schematically an embodiment of a method for arranging a signal for use in a communication system.

Figure 3: shows an amplitude distortion (non-linear transformation) function Q(x) that amplifies the high amplitude peaks or tones in a signal.

Figure 4: shows in a flow diagram an example embodiment of the invention.

Figure 5-9 : show results that are obtained according to the best mode embodiment of the invention.

**DESCRIPTION**

For the purpose of teaching of the invention, aspects and embodiments of the method and system of the invention are described in the sequel, wherein the first aspect corresponds to the claimed invention and the other subsequent aspects are examples useful to understand the invention.

In a first aspect of the present invention a method is disclosed of arranging a signal for use in a communication system. Preferably the signal is a noise signal. The signal can comprise crosstalk noise that is a random signal with predetermined properties in the frequency domain and in the time domain. The signal can furthermore comprise rfi-tones that have a discrete frequency spectrum. Also other signal components can be included in the signal. The method comprises the steps of claim 1.

In a second aspect of the present invention a method is disclosed of arranging a signal, preferably a noise signal for use in a communication system, the method comprising the steps of representing a first signal in time domain and with an amplitude distribution and the signal having a spectral density in the frequency domain, thereby achieving a represented signal; and processing said represented signal until a signal is achieved having a spectral density according to a predetermined spectral density quality criterion. According to the second aspect of the invention the method can also comprise the steps of representing a first signal in time domain and with an amplitude distribution and the signal having a spectral density in the frequency domain, thereby achieving a represented signal; and filtering the signal in representation in frequency domain including the steps of evaluating at least part of the signal representation in frequency domain and thereafter processing the signal representation in frequency domain.

The methods of the first and second aspect of the invention can be combined. The methods of the first and second aspect of the invention allow to make a signal in different iterative steps that has a predetermined amplitude distribution and/or that has a predetermined spectral density or that has a amplitude distribution and/or that has a spectral density according to a predetermined quality criterion. The predetermined quality criterion can be the crest factor of the signal that is relation of the maximal tones of the signal compared to the average of the tones of the signal. The processing steps as recited hereabove can comprise the steps of a Fast Fourier Transformation (FFT) or Inverse Fast Fourier Transformation (IFFT). The processing steps can also a include operations such as a convolution or deconvolution or multiplication or add-on of signals . The signals can be generated and stored using a set of instructions in a code format and executable in a predetermined order and compiled on a device. Such set of instructions can be software code compiled on a computer and stored in the computer or a network of computers or a floppy or CD-ROM or through the internet. The software can also be stored on an Arbitrary Wave Form Generator (AWG) card and the AWG can be used to generate the signals or reproduce stored signals from the memory. It is therefore possible to have a library of signals available that can be used in the execution or use of the methods of the first and second aspect of the invention. The communication systems can be devices such as xDSL modems, or chips within or for such modems, or cables in the network, or networks for telecommunication.

Several embodiments of the first and second aspect of the invention are recited herebelow. In the method of the first aspect, the amplitude distribution of said represented signal can be processed including a function of the predetermined amplitude distribution. This can include an inverse function of the predetermined amplitude distribution. The processed represented signal g(t) furthermore can be a function Q{f(t)} of the represented signal f(t) and wherein Q is defined as

$$Q(x) = sign(x) \cdot G^{-1}\left(F\left(|x|\right)\right)$$

with

sign(x)=x/|x| for x<>0; sign(x)=0 for x=0 ;

and with F being the amplitude distribution of said represented signal.

The method as recited of the first and second aspect of the invention can further comprise the steps of transforming the first signal in frequency domain ; and multiplying the first signal in frequency domain with spectral envelope thereby achieving a multiplied signal ; and thereafter representing the multiplied signal in time domain. In the methods said first signal in the representation in frequency domain can be generated as a set of random numbers, preferably complex numbers the modulus of the complex number characterizing amplitude, the argument of the complex number characterizing phase and the real and/or the imaginary part of essentially each of the complex numbers can be chosen according to a Gaussian distribution. Each of the complex numbers can be substantially equal to the amplitude of the predetermined spectral density.

In a third aspect of the present invention, a signal is disclosed comprising at least a random noise signal, the random signal having an amplitude distribution in the time domain according to a predetermined quality criterion and a spectral density in the frequency domain according to a predetermined quality criterion, the random signal being composed of an array of random numbers. The signal can further comprise a discrete frequency spectrum. The noise signal can be generated using a set of instructions in a code format and being executed in a predetermined order. Such set of instructions can be software code compiled on a computer and stored in the computer or a network of computers or a floppy or CD-ROM or through the internet. The software can also be stored on an Arbitrary Wave Form Generator (AWG) card and the AWG can be used to generate the signals or reproduce stored signals from the memory. It is therefore possible to have a library of signals available that can be used in the execution or use of the methods of the first and second aspect of the invention.

In a fourth aspect of the present invention, a is disclosed of generating a signal comprising at least a random noise signal, the random signal having an amplitude distribution in the time domain according to a predetermined quality criterion and having a spectral density in the frequency domain according to a predetermined quality criterion, the random signal being composed of an array of random numbers, the method comprising the step of generating a random set of numbers using a set of instructions in a code format and being executed in a predetermined order. The method can further comprise the step of generating a discrete frequency spectrum, the discrete frequency spectrum using goniometry functions and modulating essentially each of the discrete frequencies with a noise characteristic. The random noise signal and the discrete frequency spectrum can be combined using a set of instructions in a code format and being executed in a predetermined order.

In a fifth aspect of the present invention, a set of instructions is disclosed in a code format and executable in a predetermined order and compiled on a device, the set of instructions being arranged for generating a random noise signal and a discrete frequency spectrum, the random signal having an amplitude distribution in the time domain according to a predetermined quality criterion and having a spectral density in the frequency domain according to a predetermined quality criterion. Such set of instructions can be software code compiled on a computer and stored in the computer or a network of computers or a floppy or CD-ROM or through the internet. The software can also be stored on an Arbitrary Wave Form Generator (AWG) card and the AWG can be used to generate the signals or reproduce stored signals from the memory. It is therefore possible to have a library of signals available that can be used. The software can be C-code or can be compiled in a MATLAB environment.

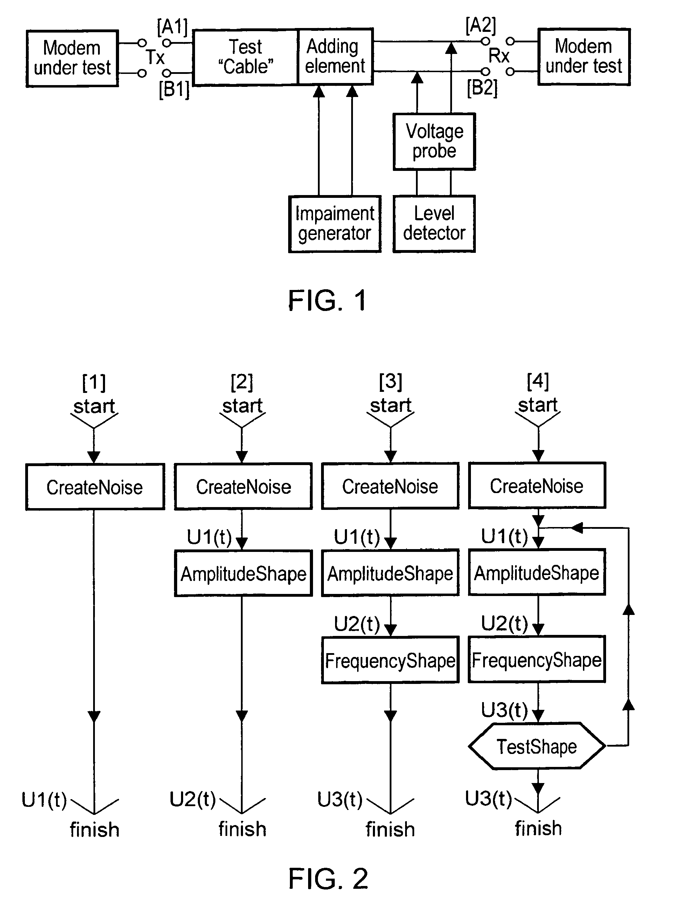

In a sixth aspect of the present invention, a system for testing the operation of a communication system is disclosed comprising a set of instructions in a code format and executable in a predetermined order and compiled on a device, the set of instructions being arranged for generating a noise signal comprising at least one of a random noise signal and a discrete frequency spectrum, the random signal having an amplitude distribution in the time domain according to a predetermined quality criterion and having a spectral density in the frequency domain according to a predetermined quality criterion. The test system according to this aspect of the invention can comprise an impairment generator for generating the noise signal. The connection elements (transformers, active devices, attenuators, etc.) that connect the impairment generator to the communication system that is tested can have an unwanted frequency dependent response. The connection element is the adding element in figure 1. The unwanted frequency dependent response can be measured for instance by generating specific test signals in the impairment generator. The unwanted frequency dependent response can be compensated by multiplying the desired spectral density of the signal divided by the unwanted frequency dependent response of the connection element.

In a seventh aspect of the present invention, a method of testing the operation of a communication system such as a xDSL modem is disclosed. The method comprises the step of superposing on a signal transceived by a said modem, a signal comprising at least one of a random noise signal and a discrete frequency spectrum, the random signal having an amplitude distribution in the time domain according to a predetermined quality criterion and having a spectral density in the frequency domain according to a predetermined quality criterion., the noise signal furthermore being composed of an array of random numbers.

In an eigth aspect of the present invention a method of testing the quality of operation of a communication system is disclosed. The method comprises the steps of superposing on a signal transceived by a said modem, a signal comprising at least one of a random noise signal and a discrete frequency spectrum, the random signal having an amplitude distribution in the time domain according to a predetermined quality criterion and having a spectral density in the frequency domain according to a predetermined quality criterion, the noise signal furthermore being composed of an array of random numbers ; and evaluating the transceived signal according to a predetermined quality criterion.

Yet in a ninth aspect of the present invention, a method of improving the design and/or production of a communication system is disclosed , the method comprising the steps of superposing on a signal transceived by a said modem, superposing on a signal transceived by a said modem, a signal comprising at least one of a random noise signal and a discrete frequency spectrum, the random signal having an amplitude distribution in the time domain according to a predetermined quality criterion and having a spectral density in the frequency domain according to a predetermined quality criterion, the noise signal furthermore being composed of an array of random numbers ; evaluating the transceived signal according to a predetermined quality criterion ; and iteratively arranging the design of said modem in order to approach closer to the quality criterion for evaluating the transceived signal.

In a tenth aspect of the present invention, a telecommunication network is disclosed including a signal comprising at least one of a random noise signal and a discrete frequency spectrum, the random signal having an amplitude distribution in the time domain according to a predetermined quality criterion and having a spectral density in the frequency domain according to a predetermined quality criterion, the noise signal furthermore being composed of an array of random numbers.

The features of the above-described aspects and embodiments of the invention can be combined.

## DETAILED DESCRIPTION OF PREFERRED EMBODIMENTS

For the purpose of teaching of the invention, preferred embodiments of the method and devices of the invention are described in the sequel.

In an embodiment of the invention, a system for testing the operation of a communication system such as a xDSL transceiver is disclosed. The set up of a test equipment for a high penetration of systems scenario in operational access networks is described. A method is disclosed of arranging a signal for use in a communication system. The purpose of transmission performance tests is to stress xDSL transceivers in a way that is representative to a high penetration of systems scenario in operational access networks. This high penetration approach enables (i) component and system designers to quantify the performance and to use it to improve their design and to prove complience with standards ; and (ii) operators to define deployment rules that apply to most operational situations.

Figure 1 illustrates the functional description of a possible test set-up. It includes:

- The test loops, being a real cable or a cable simulator;
- An adding element to inject the impairment noise (a mix of random, impulsive and harmonic noise (the rfi-tones)), into the test loop
- A high impedance, and well balanced differential voltage probe connected with level detectors such as a spectrum analyser or a rms volt meter.

When external splitters are required for the xDSL system under test (for POTS or ISDN signals), this splitter can be included in the modem under test.

The signal flow through the test equipment set-up is from port Tx to port Rx, which means that measuring upstream and downstream performance requires an interchange of transceiver position and test "cable" ends. The received signal level at port Rx is the level, measured between node A2 and B2, when port Tx as well as port Rx are terminated with the xDSL transceivers under test. The impairment generator is switched off during this measurement. The transmitted signal level at port Tx is the level, measured between node A1 and B1, under the same conditions.

The noise that the impairment generator should inject into the test setup is frequency dependent. In order that the noise that the impairment generator should inject into the test setup is a realistic representation of a real (spectral polluted) access network, is to be (a) dependent on the length of the testloop, and (b) different for downstream performance tests and upstream performance tests. This impairment noise, measured between node A2 and B2, is usually a mix of random, impulsive and harmonic noise (the rfi-tones). A set of characteristics is identified as a "noise profile".

The signal and noise levels are probed with a well balanced differential voltage probe. The noise that the impairment generator injects into the test setup is frequency dependent, is dependent on the length of the testloop and is also different for downstream performance tests and upstream performance tests. Definitions that are relevant for the use of the test equipment are the following:

- Probing an rms-voltage $U_{rms}$ [V] in this set-up, over the full signal band, means a *power level* of P [dBm] that equals:

$$P = 10 \times \log_{10}(U_{rms}{}^2/R_v \times 1000) \text{ [dBm]}$$

- Probing an rms-voltage $U_{rms}$ [V] in this set-up, within a small frequency band of $\Delta f$ (in Hertz), means an *power*

*spectral density level* of P [dBm/Hz] within that filtered band that equals:

$$P = 10 \times \log_{10}(U_{rms}^2 / R_v \times 1000 / \Delta f) \ [dBm/Hz]$$

- The bandwidth $\Delta f$ identifies the noise bandwidth of the filter, and not the-3dB bandwidth.

Figure 2 shows schematically an embodiment of a method for arranging a signal for use in a communication system. The signal comprises crosstalk noise that is a random signal with predetermined properties in the frequency domain and in the time domain. The signal can furthermore comprise rfi-tones that have a discrete frequency spectrum. Also other signal components can be included in the signal. The method comprises the steps of Claim 1. This is shown as amplitude shaping in figure 2 [2-4].

The method can also comprise the steps of representing a first signal in time domain and with an amplitude distribution and the signal having a spectral density in the frequency domain, thereby achieving a represented signal ; and processing said represented signal until a signal is achieved having a spectral density according to a predetermined spectral density quality criterion. This is shown as frequency shaping in figure 2 [2-4]. The frequency shaping step can also comprise the step of filtering the signal in representation in frequency domain including the steps of evaluating at least part of the signal representation in frequency domain and thereafter processing the signal representation in frequency domain.

The method can also comprise the step of making a signal in different iterative steps (see figure 2 [4]). Thus the signal can have a predetermined amplitude distribution and/or a predetermined spectral density or a amplitude distribution and/or a spectral density according to a predetermined quality criterion. The predetermined quality criterion can be the crest factor of the signal that is a relation of the maximal tones of the signal compared to the average of the tones of the signal. The signals can be generated and stored using a set of instructions in a code format and executable in a predetermined order and compiled on a device. Such set of instructions can be software code compiled on a computer and stored in the computer or a network of computers or a floppy or CD-ROM or through the internet. The software can also be stored on an Arbitrary Wave Form Generator (AWG) card and the AWG can be used to generate the signals or reproduce stored signals from the memory. It is therefore possible to have a library of signals available that can be used in the execution or use of the methods of the first and second aspect of the invention. The communication systems can be devices such as xDSL modems, or chips within or for such modems, or networks for telecommunication.

In detail the following embodiment is shown in figure 2. Using software, random numbers are generated (box CreateNoise in figure 2). In hardware white noise can be generated. The random numbers are filtered until a predetermined spectral density is achieved. The random numbers that are generated each represent a frequency component. The necessary processing to achieve a predetermined spectral density is executed by scaling the amplitude of the complex numbers and thereafter a IFFT processing is done in order to make the desired noise signal. Another way of executing the method is to generate random numbers that represent the phase of each frequency component and thereafter the amplitude of the complex numbers is arranged to approach or be equal to a predetermined spectral density

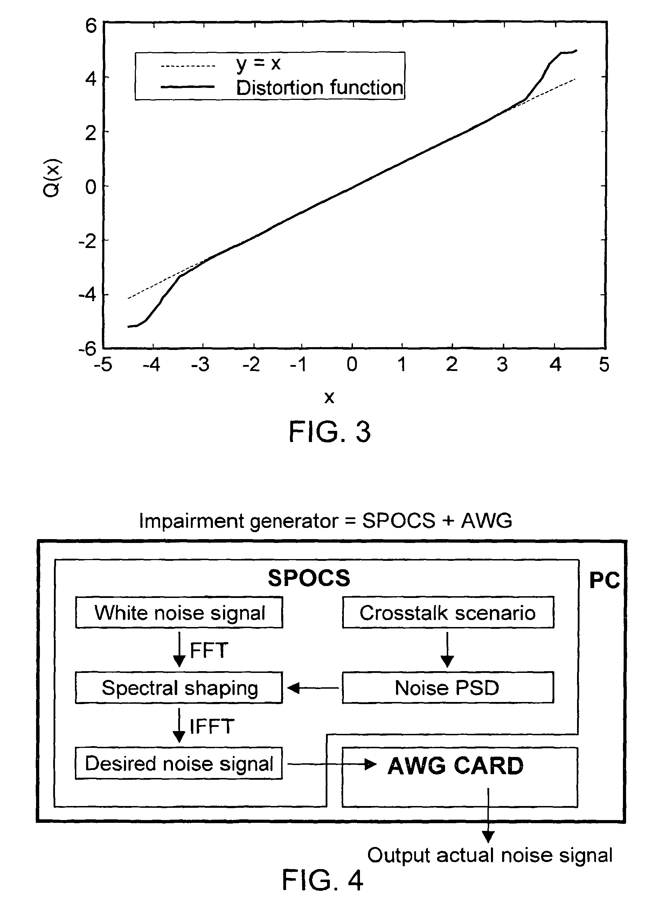

The processing in box AmplitudeShape in figure 2 is done for achieving an impact or control on the time domain characteristic. An amplitude distortion (transformation) function Q(x) is chosen that amplifies the high amplitude peaks or tones in the signal is shown in figure 3. The non-linear transformation function Q(x) can be reconstructed from the actual amplitude distribution function of the signal and the predetermined amplitude distribution function. A noise signal $f(t)$ in the period $t$ inbetween 0 en T. The amplitude distribution $F(a)$ of the signal is defined as a fraction of the time that the noise $f$ in absolute value is larger than $a$. If $G(a)$ is the predetermined amplitude distribution (such as an enhanced-gaussian, see below), and $G^{-1}(a)$ the inverse function thereof. The transformation function $Q(x)$ to make an intermediate or final signal $g(t)$ from signal $f(t)$ can be defined as:

$$Q(x) = sign(x) \cdot G^{-1}\left(F\left(|x|\right)\right)$$

$$g(t) = Q\{f(t)\} \ ;$$

$$\text{sign}(x)=x/|x| \text{ for } x<>0; \text{ sign}(x)=0 \text{ for } x=0;$$

As a result *g(t)* will have the predetermined amplitude distribution *G(a)*. *Q(x)* in a number of cases can be an analytical function but can also be numerically constructed.

An example of an enhanced gaussian function is as follows :

The amplitude distribution of gaussian type of noise is :

$$G(x) = 1 - erf\left(\frac{x}{\sqrt{2}\sigma}\right)$$

with:

$$erf(x) = \frac{2}{\sqrt{\pi}} \int_0^x dt \, \exp(-t^2),$$

and with $\sigma$ the RMS value of the signal.

The enhanced Gausian distribution is defined as :

$$G(x) = 1 - \frac{\alpha \, x/A + erf\left(\frac{x}{\sqrt{2}\sigma}\right)}{\alpha + erf\left(\frac{A}{\sqrt{2}\sigma}\right)},$$

with $\sigma$ the RMS value of the signal , and with A and $\alpha$ free parameters. Typical values for $\alpha$ are of the order of 1e-2, 1e-3. An appropriate choice for $\sigma$ is: $\sigma=\sqrt{(1+\alpha - C_f^2 \cdot \alpha/3)}$, with $C_f$ a number that is in relation to or equals the crest factor and with $\alpha$ a number that describes the deviation from gaussian noise.

In the box FrequencyShape of figure 2, the frequency domain characteristics of the signal are improved. The corrected frequency curve is achieved by comparing (dividing) a prdeterminde spectral density through the measured spectral density of the (intermediate) signal. An example hereof is given in the best mode embodiment desribed in the sequel with a convolution of FFT functions.

In the part [4] of figure 2, it is shown how an iterative procedure of the steps detailed herabove may lead to a further improvement of the final for use in or on a communication system. The iterative procedure is executed until the predeterminde quality criterions are achieved.

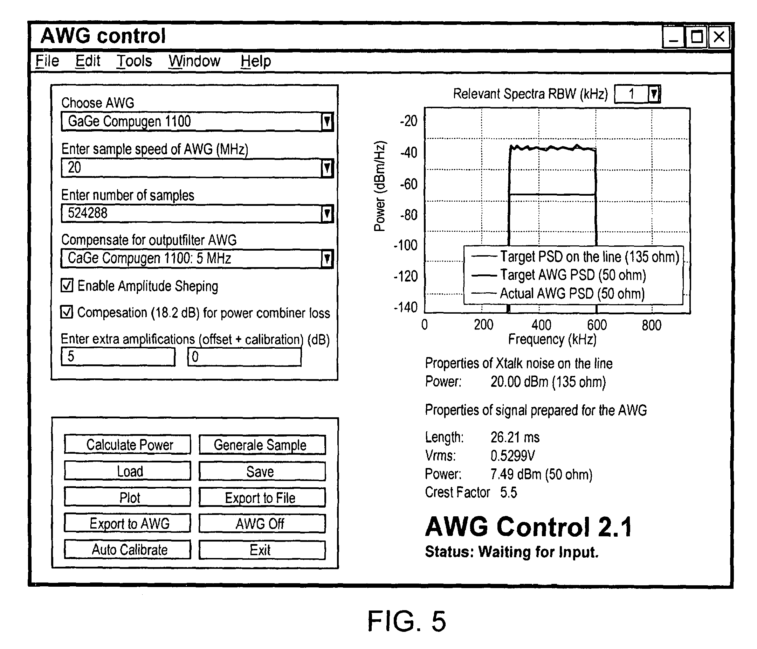

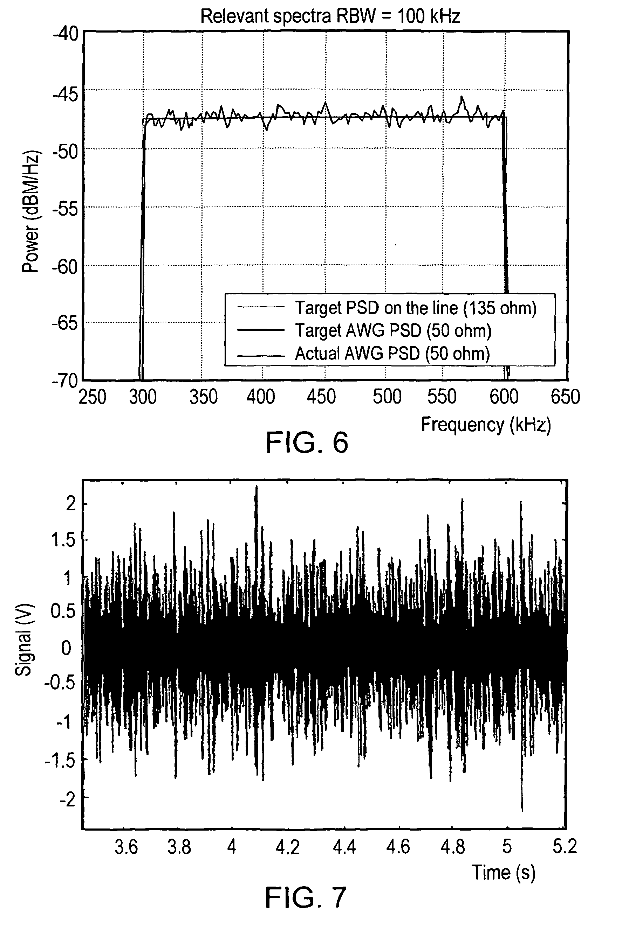

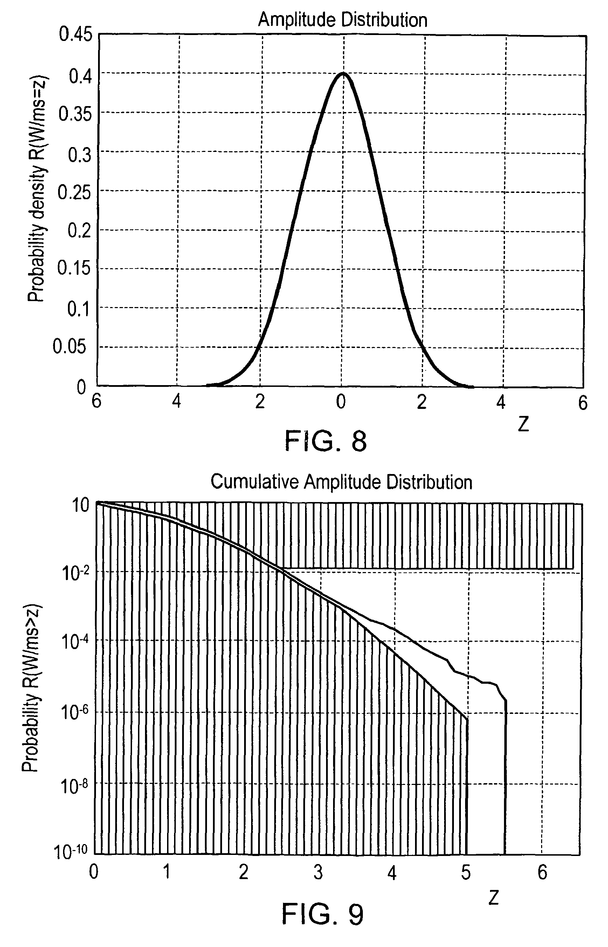

A best mode embodiment of the set of instructions of the invention is disclosed herebelow. The code given herebelow is compiled in a MATLAB environment gives the signal resulst as shown in the figures 5-9. Comments related to the functionality of the code are given after the % signs.

```
%-------------------------------------------------------------

function DemoImpair;

%-------------------------------------------------------------

% DemoImpair
%       Code, programmed in the Matlab programming language, that demonstrates
%       algorithms of an Impairment Generator, that has full control
%       over elementairy frequency and time domain characteristics (spectrum
%       probability distribution)
```

```
%        (c) 2000 KPN Research;  Rob van den Brink, Bas van den Heuvel
%
% MAIN FUNCTIONS:
%        DefineShape
%        CreateNoise    - generates noise, as an array with real random numbers
%        FrequencyShape        - modifies the spectral density of this noise
%        AmplitudeShape        - modifies the amplitude distribution of this noise
%
% SUPPORTING FUNCTIONS:
%        CalcSpec      - calculates the spectral density of noise
%        CalcCrest     - calculates the crest factor of noise
%        CalcDistrib    - calculates the probability distribution of noise
%        CalcSmooth    - smoothes a spectrum, like in a real spectrum analyzer
%        CalcEnhancedGaussDistribution - a sample of a near-gaussian distribution
%-------------------------------------------------------------------------
R=135; CF_min=5.1;
Shape=DefineShape;
%
[U,t]=CreateNoise(Shape);  plot(t,U);              title('method 1'); shg; %pause
[X,f]=CalcSpec(U,t);          plot(f,X);           title('method 1'); shg; %pause
[X,f]=CalcSpec(U,t);          plot(f,dBm(X,R));    title('method 1'); shg; %pause
[P,u]=CalcDistrib(U);    plot(u,P);                title('method 1'); shg; %pause
%
U=AmplitudeShape(U,Shape); plot(t,U);             title('method 2'); shg; %pause
[X,f]=CalcSpec(U,t);          plot(f,X);           title('method 2'); shg; %pause
[X,f]=CalcSpec(U,t);          plot(f,dBm(X,R));    title('method 2'); shg; %pause
[P,u]=CalcDistrib(U);    plot(u,P);                title('method 2'); shg; %pause
%
U=FrequencyShape(U,Shape); plot(t,U);             title('method 3'); shg; %pause
```

```
[X,f]=CalcSpec(U,t);          plot(f,X);          title('method 3'); shg; %pause
[X,f]=CalcSpec(U,t);          plot(f,dBm(X,R));   title('method 3'); shg; %pause
[P,u]=CalcDistrib(U);   plot(u,P);          title('method 3'); shg; %pause
%
for i=2:10
   i
   U=AmplitudeShape(U,Shape);
   [X,f]=CalcSpec(U,t);
   %
   U=FrequencyShape(U,Shape);
   [X,f]=CalcSpec(U,t);
   %
   if CalcCrest(U)>CF_min, break; end;
end;
[P,u]=CalcDistrib(U);
plot(t,U);          title('method 4'); shg; %pause
plot(f,dBm(X,R));   title('method 4'); shg; %pause
plot(u,P);          title('method 4'); shg; %pause
%
[Ut,t]=CreateTones(Shape);
U=U+Ut;
plot(t,U);          title('noise + RFI tones'); shg; %pause
[X,f]=CalcSpec(U,t);
plot(f,dBm(X,R));   title('method 4'); shg; %pause



%--------------------------------------------------------------------------
function [Shape] = DefineShape;
```

```
%--------------------------------------------------------------------
% create the targets for the noise that shout be generated, in terms of
%       spectral density (in this example rechtangular in nature)
%       probability distribution (in this example near Gaussian)
Fmax=4E6; Fl=300E3; Fh=700E3; N=2^18; m=N/2;
Shape.N=N;                    % number of time samples
Shape.m=m;                    % number of freq samples
Shape.dF= Fmax./(m-1);           % frequency spacing
Shape.dT= 1/(N*Shape.dF);   % time spacing
% define target spectrum (in freq domain)
Shape.freq =[0:m-1]' * Shape.dF;
Shape.spec =(Shape.freq>=Fl).*(Shape.freq<=Fh)*(1/300); % in Volt per sqrt(Hz)
% define target Cumulative Amplitude Distribution (in time domain)
cf=5.5; % desired crest factor)
Shape.DistU = 0:cf/1000:cf;
Shape.DistP = CalcEnhancedGaussDistribution(Shape.DistU, cf); %P
% define target RFI-Tones
Shape.ToneF =[99;207;333;387;531;603;711;801;909;981]*1E3;
P_dBm =[-70;-50;-60;-60;-40;-60;-60;-40;-70;-40]; % dBm @ 135 ohm
P=(10).^(P_dBm/10)*1E-3;
Shape.ToneU =sqrt(P*135); % U=sqrt(P*R); effective value
Shape.ModDepth = 0.3;  %=mod index 0.8 )
Shape.ModWidth = 10E3; %= -5 kHz .. +5 kHz)



%--------------------------------------------------------------------
function [U,t] = CreateNoise(Shape);
%--------------------------------------------------------------------
% create a noise voltage U(t), whith predefined frequency domain characteristics
```

% (spectrum), but with uncontrolled time domain characteristics (distribution)

```
N = Shape.N;                      % number of samples, to be generated
%U = rand(N,1);                   % Uniform distributed white noise
U = randn(N,1);                   % Gaussian distributed white noise
U = FrequencyShape(U,Shape);      % shaped noise
t=[0:N-1]' * Shape.dT;
```

```
%--------------------------------------------------------------------
function [U,t] = CreateTones(Shape);
%--------------------------------------------------------------------
% create a voltage U(t), with RFI Tones at predefined frequencies, amplitude
% and 10 kHz modulation bandwidh
%---creation of modulation noise up to Fmod, having an effective value of 1 "Volt"
% Xn=(f<=Shape.ModWidth/2).*exp(j*1000*rand(N,1))/sqrt(Shape.ModWidth);
% Xn(1) = 0;                      % Eliminate DC component.
% Xn(N:-1:m+2)=conj(Xn(2:ceil(m)));     % Append spectrum (negative freq.)
% Noise = (sqrt(t_max)./Shape.dT) .* real(ifft(Xn)); % Transform to time-domain
%---proof
% plot(t,Noise); shg;
% N2=sqrt(sum(Noise.*Noise)/length(Noise)) %proof of effective value of 1 "Volt"
%--------------------------------------------------------------------
Fmod=10E2;
N = Shape.N;                      % number of samples, to be generated
m = Shape.m;
t_max=N*Shape.dT;
f=[0:N-1]' * Shape.dF;
t=[0:N-1]' * Shape.dT;
%
```

```
U=0;
Xn0=(f<=Shape.ModWidth/2) .* ( sqrt(t_max) ./ Shape.dT ./ sqrt(Shape.ModWidth) );
Xn(1) = 0;                         % Eliminate DC component.
for k=1:length(Shape.ToneF);
  Xn=Xn0.*exp(j*1000*rand(N,1));
  Xn(N:-1:m+2)=conj(Xn(2:ceil(m)));        % Append spectrum (negative freq.)
  Noise = real(ifft(Xn));               % Transform to time-domain
  %
  T=1/Shape.ToneF(k);
  T0=t_max/round(t_max/T);          % force an integer number of periods
  U=U  +  Shape.ToneU(k)  *  sin(2*pi*t/T0+1000*rand) .* (1  +  Noise .*
Shape.ModDepth);
end;
```

```
%---------------------------------------------------------------------
function [U] = FrequencyShape(U,Shape)
%---------------------------------------------------------------------
% Reshape the spectrum of the sample U, as specified by the target shape
% INPUT:
%     U:      the consecutive values of the sample
%     fs:     the sample frequency
%     spektrum: the desired PSD (in V/sqrt(Hz))
%---------------------------------------------------------------------
N = length(U);
m = length(Shape.spec);     % m=N/2
t= [0:N-1]'*Shape.dT;
% perform the frequency scaling
Scaling = Shape.spec ./ CalcSpec(U,t);
```

```
X = fft(U);                                   % Tranform to frequency domain

X(1) = 0;                                     % Eliminate DC component.

X(2:m+1)   = X(2:m+1) .* Scaling;             % Scale  spectrum (positive freq.)

X(N:-1:m+2)=conj(X(2:ceil(m)));               % Append spectrum (negative freq.)

U = real(ifft(X));                            % Transform to time-domain




%-----------------------------------------------------------------------

function [U] = AmplitudeShape(U,Shape)

%-----------------------------------------------------------------------

% This function shapes the amplitude distribution of the function U

% by an amplitude dependend (non-linear) distortion function Q(x).

% The result is U(t) = Q{U(t)}

%

% Let FF be the actual cumulative distribution function of the sample, and

% let GG be the desired cumulative distribution function,

% then the distortion function is given by:

%      Q(x) = GG^{-1} FF (x)

%-----------------------------------------------------------------------

U0=sqrt(sum(U.*U)/length(U)); %scaling farct (for normalization)

% Calculate the distortion function Q

[DistP1,DistU1] = CalcDistrib(U/U0);          % the actual distribution

Q = interp1(Shape.DistP, Shape.DistU, DistP1) ;  % the distortion function

U = U0 *interp1(DistU1,Q,abs(U/U0)) .* sign(U);  % Perform the distortion

% plot(DistU1,Q); shg; %pause




%-----------------------------------------------------------------------

function [X,f] = CalcSpec(U,t);
```

```
%-----------------------------------------------------------------------
% calculate the spectral density of a signal, when it would be 'measured'
% at specified resolution bandwidth
RBW=1E3;    %RBW:        the desired resolution for the spectrum of U
N = length(U); m=N/2;
dT = t(2)-t(1);                % time spacing
dF = 1/dT;                     % frequency spacing
f= [0:m-1]'*dF;                % all positive frequencies
X = fft(U)*dT;                 % to frequency domain
X = abs(X(2:m+1));             % No DC and no negative frequencies.
X = sqrt(CalcSmooth(X.*X, f, RBW));   % average it over bandwidth RBW



%-----------------------------------------------------------------------
function [CF] = CalcCrest(U)
%-----------------------------------------------------------------------
% Calculate the Crest Factor of a signal (U(t), which is the peak value
% divided by the rms-value
Urms = sqrt(sum(U.^2)/length(U));
Upeak = max(abs(U));
CF = Upeak/Urms;



%-----------------------------------------------------------------------
function [F]=CalcEnhancedGaussDistribution(x,Cf);
%-----------------------------------------------------------------------
% Generate a Cumulative distribution function F(x) that is identified as
% "enhanced gaussian distribution"
%      Cf   = crest factor
```

```
Alpha = 1e-3;

Sigma = sqrt( (1+Alpha) - Cf^2 * Alpha/3);

x =  x .* (x>0) .* ( x<Cf) + Cf * (x>=Cf);

noemer = Alpha + erf(Cf/(sqrt(2)*Sigma));

F = 1 - (Alpha * x/Cf + erf(x/(sqrt(2)*Sigma)))/noemer;




%-----------------------------------------------------------------------

function [DistP, DistU] = CalcDistrib(U)

%-----------------------------------------------------------------------

% calculate the (cumulative) amplitude distribution of signal U

len  = length(U);

Ueff = sqrt(sum(U .* U)/length(U));

U    = abs(U/Ueff);

% --- evaluate distribution function

Nbins = min([50,floor(len/10)]);

[cumbin,xx] = hist(U,Nbins);

BinWidth=xx(2) - xx(1);

DistU = xx - BinWidth/2; % shift

for n = [Nbins-1:-1:1];   cumbin(n) = cumbin(n) + cumbin(n+1); end

DistP = cumbin/len;

% --- improve numerical stability for other routines, when they use this result

DistU = [ 0 , DistU(2:end)];  % start at x = 0

DistP = [DistP, 1/len];

DistU = [DistU,xx(Nbins) + 0.999 * BinWidth/2]; % add final (single) point

DistP = [DistP, 1e-100];

DistU = [DistU,xx(Nbins) + (1.001) * BinWidth/2]; % factor 1.001 for stability
```

```
%-----------------------------------------------------------------
function [PSD,freq]=CalcSmooth(PSD,freq,RBW)
%-----------------------------------------------------------------
% Imitate a real Spectrum Analyzer, with finite resolution bandwidth, and
% Gaussian shaped band filters
%       PSD = "power spectral density" which is de square of the "spectral
%                density: in Volts per square Hertz.
%-----------------------------------------------------------------
N = length(PSD);
df = freq(2)-freq(1);
br = 3 * floor(RBW/df);
factor = 2*br + 1;
if (factor > 1)
    ff = df * (-br:br);                    % smooth interval
    mask = exp(-ff.*ff/(2*RBW^2));
    mask = mask/sum(mask);                 % gaussian mask of resolution bandfilter
    xhulp = [PSD;zeros(2*br,1)];
    yhulp = filter(mask,1,xhulp);          % smart convolution
    PSD = yhulp(br+1:end-br);
end;
```

## Claims

1. A method of arranging a test signal for use in a communication system, the method comprising the steps of:

   - generating values of a first signalf(t) in the time domain, the first signal having an amplitude distribution F in the time domain and a spectral density in the frequency domain; and
   - processing the values of said first signalf(t) according to a non-linear transformation, to produce values of a processed signal g(t) as a function Q{f(t)} of the first signal f(t) and wherein Q is defined as

$$Q(x) = sign(x).G^{-1} (F(|x|))$$

   with sign(x)=x/|x| for x<>0; sign (x)=0 for x=0 and with G being a predetermined amplitude distribution function.

**2.** The method as recited in claim 1 further comprising the step of generating the first signal f(t) with a predetermined spectral density.

**3.** The method as recited in claim 1 further comprising the steps of:

- transforming the first signal to frequency domain; and
- multiplying the first signal in frequency domain with a spectral envelope thereby achieving a multiplied signal; and thereafter
- transforming the multiplied signal to time domain.

**4.** The method as recited in claim 3 further comprising the step of comparing the amplitude distribution of said generated first signal with a predetermined amplitude distribution and thereafter arranging the non-linear transformation in order to achieve a processed signal with an amplitude distribution approaching the predetermined amplitude distribution.

**5.** The method as recited in claim 3 further comprising the step of achieving the multiplied signal with a spectral density according to a predetermined spectral density quality criterion.

**6.** The method as recited in claim 5 wherein at least two of the different steps are iteratively executed.

**7.** The method as recited in claim 5 wherein at least two of the different steps are iteratively executed until at least a predetermined crest factor is reached.

**8.** The method as recited in claim 1 wherein said test signal is a noise signal.

**9.** The method as recited in claim 8 wherein said first signal in the representation in frequency domain is generated as a set of random numbers, preferably complex numbers the modulus of the complex number characterizing amplitude, the argument of the complex number characterizing phase.

**10.** The method as recited in claim 9 wherein the real and/or the imaginary part of each of the complex numbers is chosen according to a Gaussian distribution.

**11.** The methods as recited in claim 9 wherein the modulus of each of the complex numbers is substantially equal to the amplitude of the predetermined spectral density.

**12.** The method as recited in claim 9 wherein the argument of each of the complex numbers is random.

**13.** The method according to claim 1 comprising supplying the test signal to a communication system.

**14.** The method according to claim 13 comprising injecting the test signal in a test loop with an adding element.

**15.** The method of claim 13, comprising

- filtering the processed signal in representation in frequency domain including the steps of evaluating at least part of the processed signal representation in frequency domain and thereafter processing the processed signal representation in frequency domain.

**16.** The method as recited in claim 13 or 15 wherein the processing step includes an iterative processing.

**17.** The method as recited in claim 13 or 17 wherein the processing step includes an iterative processing until at least a predetermined crest factor is reached.

**18.** A method according to claim 1 wherein the first signal is generated using a set of instructions in a code format and being executed in a predetermined order to generate a noise signal.

**19.** A method as recited in claim 17 further comprising the step of generating a discrete frequency spectrum, the discrete frequency spectrum using goniometry functions and modulating each of the discrete frequencies with a noise characteristic.

**20.** The method as recited in claim 19 further comprising the step of combining the random noise signal and the discrete frequency spectrum using a set of instructions in a code format and being executed in a predetermined order.

**21.** A computer program product, comprising a program of instructions, which when executed by a computer cause the computer to perform the method of claim 1.

**22.** A test system for testing the operation of a communication system, programmed to generate the test signal according to the method of claim 1.

**23.** A method according to claim 19, comprising testing the operation of a communication system, the method comprising the step of superposing the test signal on a signal to be received by a modem.

**24.** A method according to claim 19, the method comprising the steps of :

- superposing the test signal on a signal that is to be received by a modem;
- evaluating the received signal of the modem according to a predetermined quality criterion; and
- iteratively arranging the design of said modem in order to approach closer to the quality criterion for evaluating the received signal.

**Patentansprüche**

**1.** Verfahren zur Ausgestaltung eines Testsignals zur Verwendung in einem Kommunikationssystem, wobei das Verfahren die folgenden Schritte aufweist:

- Erzeugen von Werten eines ersten Signals f(t) im Zeitbereich, wobei das erste Signal eine Amplitudenverteilung F im Zeitbereich und eine Spektraldichte im Frequenzbereich aufweist, und
- Verarbeiten der Werte des ersten Signals f(t) gemäß einer nichtlinearen Transformation, um Werte eines verarbeiteten Signals g(t) als eine Funktion Q{f(t)} des ersten Signals f(t) zu erzeugen, und wobei Q als

$$Q(x) = \text{Vorzeichen}(x)\ G^{-1}(F(|x|))$$

definiert ist, wobei Vorzeichen (x) - x/ |x| für x <> 0, Vorzeichen (x) = 0 für x = 0 und G eine vorbestimmte Amplitudenverteilungsfunktion ist.

**2.** Verfahren nach Anspruch 1, das ferner den Schritt aufweist, das erste Signal f(t) mit einer vorbestimmten Spektraldichte zu erzeugen.

**3.** Verfahren nach Anspruch 1, das ferner die folgenden Schritte aufweist:

- Transformieren des ersten Signals in den Frequenzbereich und
- Multiplizieren des ersten Signals im Frequenzbereich mit einer spektralen Hüllkurve, wodurch ein multipliziertes Signals erhalten wird, und danach
- Transformieren des multiplizierten Signals in den Zeitbereich.

**4.** Verfahren nach Anspruch 3, das ferner den Schritt aufweist, die Amplitudenverteilung des erzeugten ersten Signals mit einer vorbestimmten Amplitudenverteilung zu vergleichen und danach die nichtlineare Transformation auszugestalten, um ein verarbeitetes Signal mit einer Amplitudenverteilung zu erreichen, die sich der vorbestimmten Amplitudenverteilung annähert.

**5.** Verfahren nach Anspruch 3, das ferner den Schritt aufweist, das multiplizierte Signal mit einer Spektraldichte gemäß einem vorbestimmten Spektraldichtequalitätskriterium zu erhalten.

**6.** Verfahren nach Anspruch 5, bei dem mindestens zwei der verschiedenen Schritte iterativ ausgeführt werden.

7. Verfahren nach Anspruch 5, bei dem mindestens zwei der verschiedenen Schritte iterativ ausgeführt werden, bis zumindest ein vorbestimmter Scheitelfaktor erreicht ist.

8. Verfahren nach Anspruch 1, bei dem das Testsignal ein Störsignal ist.

9. Verfahren nach Anspruch 8, bei dem das erste Signal in der Darstellung im Frequenzbereich als ein Satz von Zufallszahlen erzeugt wird, bevorzugt komplexen Zahlen, wobei das Modul der komplexen Zahl die Amplitude kennzeichnet und das Argument der komplexen Zahl die Phase kennzeichnet.

10. Verfahren nach Anspruch 9, bei dem der reale und/oder der imaginäre Teil von jeder der komplexen Zahlen gemäß einer Gaußverteilung gewählt wird.

11. Verfahren nach Anspruch 9, bei dem das Modul von jeder der komplexen Zahlen im Wesentlichen gleich der Amplitude der vorbestimmten Spektraldichte ist.

12. Verfahren nach Anspruch 9, bei dem das Argument von jeder der komplexen Zahlen zufällig ist.

13. Verfahren nach Anspruch 1, das aufweist, das Testsignal an ein Kommunikationssystem zu liefern.

14. Verfahren nach Anspruch 13 das aufweist, das Testsignal mit einem Addierelement in eine Testschleife einzuspeisen.

15. Verfahren nach Anspruch 13, das aufweist,

   - das verarbeitete Signal in einer Darstellung im Frequenzbereich zu filtern einschließlich der Schritte, zumindest einen Teil der Darstellung des verarbeiteten Signals im Frequenzbereich auszuwerten und danach die Darstellung des verarbeiteten Signals im Frequenzbereich zu verarbeiten.

16. Verfahren nach Anspruch 13 oder 15, bei dem der Verarbeitungsschritt eine iterative Verarbeitung aufweist.

17. Verfahren nach Anspruch 13 oder 17, bei dem der Verarbeitungsschritt eine iterative Verarbeitung aufweist, bis zumindest ein vorbestimmter Scheitelfaktor erreicht ist.

18. Verfahren nach Anspruch 1, bei dem das erste Signal unter Verwendung eines Satzes von Befehlen erzeugt wird, die in einem Kodierungsformat vorliegen und in einer vorbestimmten Reihenfolge ausgeführt werden, um ein Störsignal zu erzeugen.

19. Verfahren nach Anspruch 17, das ferner den Schritt aufweist, ein diskretes Frequenzspektrum zu erzeugen, wobei das diskrete Frequenzspektrum Goniometriefunktionen verwendet, und jede der diskreten Frequenzen mit einer Störeigenschaft zu modulieren.

20. Verfahren nach Anspruch 19, das ferner den Schritt aufweist, das Zufallsstörsignal und das diskrete Frequenzspektrum unter Verwendung eines Satzes von Befehlen zu kombinieren, die in einem Kodierungsformat vorliegen und in einer vorbestimmten Reihenfolge ausgeführt werden.

21. Computerprogrammprodukt, das ein Programm von Befehlen aufweist, die dann, wenn sie durch einen Computer ausgeführt werden, den Computer dazu veranlassen, das Verfahren nach Anspruch 1 auszuführen.

22. Testsystem zum Testen des Betriebs eines Kommunikationssystems, das programmiert ist, um das Testsignal gemäß dem Verfahren nach Anspruch 1 zu erzeugen.

23. Verfahren nach Anspruch 19, das aufweist, den Betrieb eines Kommunikationssystems zu testen, wobei das Verfahren den Schritt aufweist, ein Signal, das von einem Modem empfangen werden soll, mit dem Testsignal zu überlagern.

24. Verfahren nach Anspruch 19, das die folgenden Schritte aufweist:

   - Überlagern eines Signals, das von einem Modem empfangen werden soll, mit dem Testsignal,

- Auswerten des empfangenen Signals des Modems gemäß einem vorbestimmten Qualitätskriterium und
- iteratives Ausgestalten der Auslegung des Modems, um näher an das Qualitätskriterium zur Auswertung des empfangenen Signals heranzukommen.

**Revendications**

1. Méthode d'arrangement d'un signal de test destiné à être utilisé dans un système de communication, ladite méthode comprenant les étapes consistant à :

   - générer des valeurs d'un premier signal f(t) dans le domaine temporel, ledit premier signal ayant une distribution de son amplitude F dans le domaine temporel et une densité spectrale dans le domaine fréquentiel ; et
   - traiter les valeurs dudit premier signal f(t) suivant une transformation non linéaire afin de produire des valeurs d'un signal traité g(t) sous la forme d'une fonction Q{f(t)} du premier signal f(t), Q étant donné par l'expression

$$Q(x) = \text{sign}(x) \cdot G^{-1}(F|x|))$$

   où sign(x) = x/|x| pour x <> 0 ; sign(x) = 0 pour x = 0 ; et où G est une fonction de distribution de l'amplitude prédéterminée.

2. Méthode selon la revendication 1, comprenant en plus l'étape consistant à générer le premier signal f(t) avec une densité spectrale prédéterminée.

3. Méthode selon la revendication 1, comprenant en plus les étapes consistant à:

   - transformer le premier signal dans le domaine fréquentiel ; et
   - multiplier le premier signal dans le domaine fréquentiel par une enveloppe spectrale afin d'obtenir ainsi un signal multiplié ; et ensuite
   - transformer le signal multiplié dans le domaine temporel.

4. Méthode selon la revendication 3, comprenant en plus l'étape consistant à comparer la distribution de l'amplitude dudit premier signal généré à une distribution d'amplitude prédéterminée et ensuite arranger la transformation non linéaire de manière à obtenir un signal traité dont la distribution de l'amplitude approche la distribution d'amplitude prédéterminée.

5. Méthode selon la revendication 3, comprenant en plus l'étape consistant à obtenir le signal multiplié avec une densité spectrale conformément à un critère de qualité de densité spectrale prédéterminé.

6. Méthode selon la revendication 5, dans laquelle au moins deux des différentes étapes sont exécutées itérativement.

7. Méthode selon la revendication 5 dans laquelle au moins deux des différentes étapes sont exécutées itérativement jusqu'à atteindre au moins un facteur crête prédéterminé.

8. Méthode selon la revendication 1, dans laquelle ledit signal de test est un signal de bruit.

9. Méthode selon la revendication 8, dans laquelle ledit premier signal dans la représentation dans le domaine fréquentiel est généré sous la forme d'un ensemble de nombres aléatoires, de préférence de nombres complexes, le module du nombre complexe caractérisant l'amplitude tandis que l'argument du nombre complexe caractérise la phase.

10. Méthode selon la revendication 9, dans laquelle la partie réelle et/ou la partie imaginaire de chacun des nombres complexes est choisie suivant une distribution gaussienne.

11. Méthode selon la revendication 9, dans laquelle le module de chacun des nombres complexes est sensiblement égal à l'amplitude de la densité spectrale prédéterminée.

**12.** Méthode selon la revendication 9, dans laquelle l'argument de chacun des nombres complexes est aléatoire.

**13.** Méthode selon la revendication 1, comprenant l'application du signal de test à un système de communication.

**14.** Méthode selon la revendication 13, comprenant l'injection du signal de test dans une boucle de test avec un élément additionneur.

**15.** Méthode selon la revendication 13, comprenant le filtrage du signal traité dans la représentation dans le domaine fréquentiel, avec l'évaluation d'au moins une partie de la représentation du signal traité dans le domaine fréquentiel suivie du traitement de la représentation du signal traité dans le domaine fréquentiel.

**16.** Méthode selon la revendication 13 ou la revendication 15, dans laquelle l'étape de traitement comprend un traitement itératif.

**17.** Méthode selon la revendication 13 ou la revendication 17, dans laquelle l'étape de traitement comprend un traitement itératif jusqu'à atteindre au moins un facteur crête prédéterminé.

**18.** Méthode selon la revendication 1, dans laquelle le premier signal est généré en utilisant un jeu d'instructions dans un format de code et en l'exécutant dans un ordre prédéterminé afin de générer un signal de bruit.

**19.** Méthode selon la revendication 17, comprenant en plus l'étape consistant à générer un spectre de fréquences discrètes, ledit spectre de fréquences discrètes utilisant des fonctions goniométriques, et à moduler chacune des fréquences discrètes avec une caractéristique de bruit.

**20.** Méthode selon la revendication 19, comprenant en plus l'étape consistant à combiner le signal de bruit aléatoire et le spectre de fréquences discrètes en utilisant un jeu d'instructions dans un format de code et en l'exécutant dans un ordre prédéterminé.

**21.** Produit logiciel informatique, comprenant un jeu d'instructions qui, lorsqu'il est exécuté par un ordinateur, permet à l'ordinateur de mettre en oeuvre la méthode selon la revendication 1.

**22.** Système de test pour tester le fonctionnement d'un système de communication, programmé pour générer le signal de test suivant la méthode de la revendication 1.

**23.** Méthode selon la revendication 19, comprenant le test du fonctionnement d'un système de communication, ladite méthode comprenant l'étape consistant à superposer le signal de test à un signal destiné à être reçu par un modem.

**24.** Méthode selon la revendication 19, comprenant les étapes consistant à

    - superposer le signal de test à un signal destiné à être reçu par un modem ;
    - évaluer le signal reçu par le modem suivant un critère de qualité prédéterminé ; et
    - arranger itérativement la conception dudit modem de manière à s'approcher au plus près du critère de qualité pour évaluer le signal reçu.

FIG. 1

FIG. 2

FIG. 3

Impairment generator = SPOCS + AWG

FIG. 4

AWG control

File   Edit   Tools   Window   Help

Choose AWG
GaGe Compugen 1100

Enter sample speed of AWG (MHz)
20

Enter number of samples
524288

Compensate for outputfilter AWG
CaGe Compugen 1100: 5 MHz

☑ Enable Amplitude Sheping

☑ Compesation (18.2 dB) for power combiner loss

Enter extra amplifications (offset + calibration) (dB)
5         0

Calculate Power     Generale Sample
Load               Save
Plot               Export to File
Export to AWG      AWG Off
Auto Calibrate     Exit

Relevant Spectra RBW (kHz)  1

— Target PSD on the line (135 ohm)
— Target AWG PSD (50 ohm)
— Actual AWG PSD (50 ohm)

Power (dBm/Hz) vs Frequency (kHz)

Properties of Xtalk noise on the line
Power:      20.00 dBm (135 ohm)

Properties of signal prepared for the AWG

Length:    26.21 ms
Vrms:      0.5299V
Power:     7.49 dBm (50 ohm)
Crest Factor  5.5

**AWG Control 2.1**
**Status: Waiting for Input.**

FIG. 5

EP 1 189 381 B1

FIG. 6

FIG. 7

Amplitude Distribution

FIG. 8

Cumulative Amplitude Distribution

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2783374

- US 4317214 A